# EUROPÄISCHE PATENTSCHRIFT

(11) **EP 1 654 294 B1**
(45) Veröffentlichungstag und Bekanntmachung des Hinweises auf die Patenterteilung: **21.11.2007**
(21) Anmeldenummer: 04763123.9
(22) Anmeldetag: 08.07.2004
(51) Int. Cl.: C08F 10/00, C08F 4/80, C08F 2/24

(54) **VERFAHREN ZUR EMULSIONSPOLYMERISATION VON OLEFINEN**
METHOD FOR EMULSION POLYMERIZING OLEFINS
PROCEDE DE POLYMERISATION EN EMULSION D'OLEFINES

(30) Priorität: 01.08.2003 DE 10335990
(43) Veröffentlichungstag der Anmeldung: 10.05.2006
(73) Patentinhaber: BASF Aktiengesellschaft, 67056 Ludwigshafen (DE)
(72) Erfinder: CHOWDHRY, Mubarik, Mahmood, F-67000 Strasbourg (FR); NIEKEN, Ulrich, 67434 Neustadt (DE); HAAG, Monica, 67063 Ludwigshafen (DE)
(86) Internationale Anmeldenummer: PCT/EP2004/007469
(87) Internationale Veröffentlichungsnummer: WO 2005/014668

(56) Entgegenhaltungen:
- WO-A-03/006528

## Beschreibung

Die vorliegende Erfindung betrifft ein Verfahren zur Herstellung einer wässrigen Polymerdispersion durch Umsetzung wenigstens eines Olefins in Anwesenheit wenigstens eines Polymerisationskatalysators und eines Emulgators in wässrigem Medium, welches dadurch gekennzeichnet, dass der Polymerisationskatalysator in einer in situ-Reaktion durch Umsetzung der Ligandenverbindung 2,6-Dichloro-para-benzochinon (Ia) und/oder 2,3,6-Trichloro-para-benzochinon (Ib)
mit einer Phosphinverbindung PR₃', wobei R' Wasserstoff, C₁-C₁₂-Alkylgruppen, C₃-C₁₂-Cycloalkylgruppen, C₇-C₁₅-Aralkylgruppen oder C₆-C₁₄-Arylgruppen bedeutet,
oder mit einer Diphosphinverbindung R₂'P-G-PR₂', wobei R' die gleiche Bedeutung hat wie bei den Phosphinverbindungen PR₃' und G für einen zweibindigen Rest wie C₁-C₁₂-Alkylengruppen, C₃-C₁₂-Cycloalkylengruppen, C₇-C₁₅-Aralkylengruppen oder C₆-C₁₄-Arylengruppen steht,
sowie mit einer Metallverbindung der allgemeinen Formel M(L²)₂ oder M(L²)₂(L¹)_{z},
wobei die Variablen wie folgt definiert sind:
- M: ein Übergangsmetall der Gruppen 7 bis 10 des Periodensystems der Elemente;
- L¹: Phosphane (R¹)ₓPH₃₋ₓ oder Amine (R¹)ₓNH₃₋ₓ mit gleichen oder verschiedenen Resten R¹, Diamine, Ether (R¹)₂O, Wasser, Alkohole (R¹)OH, Pyridin, Pyridinderivate der Formel C₅H₅₋ₓ(R¹)ₓN, Kohlenmonoxid, C₁-C₁₂-Alkylnitrile, C₆-C₁₄-Arylnitrile oder ethylenisch ungesättigten Doppelbindungssystemen, wobei x eine ganze Zahl von 0 bis 3 bedeutet,
- R¹: Wasserstoff, C₁-C₂₀-Alkylgruppen, die ihrerseits mit O(C₁-C₆-Alkyl)- oder N(C₁-C₆-Alkyl)₂-Gruppen substituiert sein können,
C₃-C₁₂-Cycloalkylgruppen, C₇-C₁₅-Aralkylgruppen und
C₆-C₁₄-Arylgruppen,
- L²: Halogenidionen, R²ₓNH₃₋ₓ, wobei x eine ganze Zahl von 0 bis 3 und R² C₁-C₁₂-Alkylgruppen bedeutet, und weiterhin C₁-C₆-Alkylanionen, Allylanionen, Benzylanionen oder Arylanionen, wobei L¹ und L² miteinander durch eine oder mehrere kovalente Bindungen verknüpft sein können,
- z: eine Zahl von 0 bis 4,
erzeugt wird und die Polymerisation des wenigstens einen Olefins in wässrigem Medium erfolgt, welches mindestens 50 Vol.-% Wasser enthält.

Auf eine Isolierung und Reinigung des in situ-gebildeten Komplexes wird verzichtet.

Wässrige Dispersionen von Polymeren werden in zahlreichen sehr unterschiedlichen Anwendungen kommerziell verwertet. Zu nennen sind beispielsweise Papieranwendungen (Streicherei und Oberflächenleimung), Rohstoffe für Anstrich und Lacke, Klebrohstoffe (u.a. Haftklebstoffe), Textil- und Lederapplikationen, in der Bauchemie, Formschäume (Matratzen, Teppichrückenbeschichtungen) sowie für medizinische und pharmazeutische Produkte, beispielsweise als Bindemittel für Präparate. Eine Zusammenfassung findet sich in D. Distler (Herausgeber) "Wässrige Polymerdispersionen", Wiley-VCH Verlag, 1. Auflage, 1999.

Bisher war es schwierig, wässrige Dispersionen von Polyolefinen herzustellen. Es wäre aber wünschenswert, derartige wässrige Dispersionen von Polyolefinen bereitstellen zu können, weil die Monomere wie Ethylen oder Propylen unter wirtschaftlichen Aspekten sehr vorteilhaft sind.

Die gängigen Verfahren zur Herstellung derartiger wässriger Dispersionen aus den entsprechenden Olefinen bedienen sich entweder der radikalischen Hochdruckpolymerisation oder aber der Herstellung von Sekundärdispersionen.

Diese Verfahren sind mit Nachteilen behaftet. Die radikalischen Polymerisationsverfahren erfordern extrem hohe Drücke, sie sind in technischem Maßstab auf Ethylen und Ethylencopolymerisate beschränkt, und die erforderlichen Apparaturen sind sehr teuer in Anschaffung und Wartung. Eine andere Möglichkeit besteht darin, zunächst Ethylen in einem beliebigen Verfahren zu polymerisieren und anschließend eine Sekundärdispersion herzustellen, wie in US-A 5,574,091 beschrieben. Diese Methode ist ein Mehrstufenverfahren und somit sehr aufwendig.

Es ist deshalb wünschenswert, Olefine wie Ethylen oder Propylen unter den Bedingungen der Emulsionspolymerisation zu polymerisieren und die geforderte wässrige Dispersion in einem Schritt aus dem entsprechenden Olefin herzustellen. Außerdem haben Emulsionspolymerisationsverfahren ganz allgemein den Vorteil, dass sie Polymere mit hohen Molmassen liefern, wobei die Wärmeabfuhr verfahrensbedingt gut im Griff ist. Schließlich sind Reaktionen in wässrigen Systemen ganz allgemein deshalb interessant, weil Wasser ein billiges und umweltfreundliches Lösemittel ist.

Bisher vorgestellte Verfahren für die Emulsionspolymerisation von Olefinen wie Ethylen oder Propylen sind noch zu verbessern. Das Problem liegt im Allgemeinen im für die Polymerisation dieser Monomeren erforderlichen Katalysator.

Aufgrund der großen kommerziellen Bedeutung von Polyolefinen ist die Suche nach verbesserten Verfahren zur Polymerisation auch weiterhin von großer Bedeutung.

Einen guten Überblick über den Stand der Technik zur Polymerisation von Olefinen in wässrigem Medium, insbesondere unter Verwendung in situ-hergestellter Polymerisationskatalysatoren, gibt die von der Anmelderin beim Deutschen Patent- und Markenamt eingereichte, nicht vorveröffentlichte Patentanmeldung mit der Anmeldenummer 10234005.6. Gegenstand dieser Anmeldung, auf welche hiermit ausdrücklich Bezug genommen wird, ist die breite Verwendung von speziellen chinoiden Ligandenverbindungen und speziellen Übergangsmetallverbindungen zur in situ-Herstellung von Polymerisationskatalysatoren und deren Verwendung bei der Polymerisation von Olefinen in wässrigem Medium. Die in den Beispielen verwendeten in situ-Katalysatoren wurden unter Verwendung von 2,3,5,6-Tetrachloro-para-benzochinon sowie 2,3,5,6-Tetrabromo-para-benzochinon als Ligandenverbindung hergestellt. Allerdings vermögen die Aktivitäten der unter Verwendung vorgenannter Chinonverbindungen hergestellten in situ-Katalysatoren nicht voll zu befriedigen, denn die erhaltenen wässrigen Polymerdispersionen wiesen lediglich Feststoffgehalte von 8 (1-Buten/Ethylen) bis 18 Gew.-% (Ethylen) auf.

Es bestand deshalb die Aufgabe, ein verbessertes Verfahren bereitzustellen, welches wässrige Polymerdispersionen mit höheren Feststoffgehalten liefert.

Es wurde nun gefunden, dass diese Aufgabe durch das eingangs definierte Verfahren gelöst wird.

Als wenigstens ein Olefin, welches zur erfindungsgemäßen Polymerisation eingesetzt werden kann seien genannt: Ethylen, Propylen, 1-Buten, 1-Penten, 1-Hexen, 1-Hepten, 1-Octen, 1-Decen und 1-Eicosen, aber auch verzweigte Olefine wie 4-Methyl-1-penten, Vinylcyclohexen und Vinylcyclohexan sowie Styrol, para-Methylstyrol und para-Vinylpyridin, wobei Ethylen und Propylen bevorzugt sind. Besonders bevorzugt ist Ethylen.

Neben einem der vorgenannten Hauptolefine kann im erfindungsgemäßen Verfahren noch wenigstens ein weiteres Olefin als Comonomer zur Polymerisation eingesetzt werden, wobei das wenigstens eine Comonomer aus folgenden Gruppen gewählt werden kann:
- Ethylen sowie 1-Olefine wie Propylen, 1-Buten, 1-Penten, 1-Hexen, 1-Hepten, 1-Octen, 1-Decen und 1-Eicosen, aber auch verzweigte Olefine wie 4-Methyl-1-penten, Vinylcyclohexen und Vinylcyclohexan sowie Styrol, para-Methylstyrol und para-Vinylpyridin, wobei Propylen, 1-Buten, 1-Penten, 1-Hexen, 1-Hepten, 1-Octen, 1-Decen bevorzugt sind;
- interne Olefine wie Norbornen, Norbornadien oder cis- oder trans-2-Buten;
- polare Monomere wie Acrylsäure, Acrylsäure-C₁-C₈-alkylester, 2-Hydroxyethylacrylat, 3-Hydroxypropylacrylat, 4-Hydroxybutylacrylat, Methacrylsäure, Methacrylsäure-C₁-C₈-alkylester, C₁-C₆-Alkylvinylether und Vinylacetat; bevorzugt sind Acrylsäure, Acrylsäuremethylester, Acrylsäureethylester, Acrylsäure-n-butylester, 2-Ethylhexylacrylat, 2-Hydroxyethylacrylat, Methylmethacrylat, Ethylmethacrylat, n-Butylmethacrylat, Ethylvinylether und Vinylacetat.

Dabei lässt sich das Verhältnis des Hauptolefins zu dem wenigstens einen Comonomer frei wählen, wobei das Hauptolefin im zu polymerisierenden Gemisch zu ≥ 50 mol-% eingesetzt wird und die Gesamtmenge des wenigstens einen Comonomers ≤ 50 mol-% beträgt. Häufig wird jedoch lediglich ein Hauptolefin zur Polymerisation eingesetzt. Bei Verwendung von wenigstens einem Comonomer beträgt die Comonomerengesamtmenge oft ≤ 40 mol.-%, ≤ 30 mol.%, ≤ 20 mol.-% oder ≤ 10 mol.-% sowie ≥ 0,1 mol-%, ≥ 0,5 mol-%, ≥ 1 mol-%, ≥ 5 mol-% oder ≥ 10 mol-% und alle Werte dazwischen.

Die Synthese der Ligandenverbindungen Ia und Ib ist dem Fachmann an sich bekannt. Auch stehen die beiden Ligandenverbindungen Ia und Ib kommerziell im Handel zur Verfügung.

Die Ligandenverbindungen Ia und Ib können allein oder in Gemischen eingesetzt werden. Die molaren Verhältnisse von Ia zu Ib betragen daher 0:100 bis 100:0 mol%. Oft betragen die molaren Verhältnisse 0:100 mol-%, 10:90 mol-%, 50:50 mol-%, 90:10 mol-% oder 100:0 mol-% und alle Werte dazwischen.

Die Ligandenverbindungen Ia und/oder Ib werden mit einer Phosphinverbindung PR₃' vereinigt, wobei R' Wasserstoff, C₁-C₁₂-Alkylgruppen, C₃-C₁₂-Cycloalkylgruppen, C₇-C₁₅-Aralkylgruppen oder C₆-C₁₄-Arylgruppen bedeutet. Als besonders bevorzugte Phosphinverbindung wird Triphenylphosphin eingesetzt.

Anstelle der Phosphinverbindung PR₃ kann auch die Diphosphinverbindung R₂'P-G-PR₂' verwendet werden, wobei R' die gleiche Bedeutung hat wie bei den Phosphinverbindungen PR₃' und G für einen zweibindigen Rest wie C₁-C₁₂-Alkylengruppen, C₃-C₁₂-Cycloalkylengruppen, C₇-C₁₅-Aralkylengruppen oder C₆-C₁₄-Arylengruppen steht.

Derartige Phosphinverbindungen können nach üblichen Synthesen der organischen Chemie hergestellt werden und sind auch im Handel erhältlich.

Das molare Verhältnis von Ligandenverbindung Ia und/oder Ib zur vorgenannten Phosphinverbindung beträgt 1:100 bis 100:1, oft 1:50 bis 50:1 oder 1:10 bis 10:1 und häufig 1:4 bis 4:1 und alle Werte dazwischen.

Die Ligandenverbindungen Ia und/oder Ib werden neben der Phosphinverbindung auch mit einer oder mehreren Metallverbindungen der Formel M(L²)₂ oder M(L²)₂(L¹)_{z} vereinigt. Dabei sind die Variablen wie folgt definiert:
- L¹: wird gewählt aus Phosphanen der Formel (R¹)ₓPH₃₋ₓ oder Aminen der Formel (R¹)ₓNH₃₋ₓ, wobei x eine ganze Zahl zwischen 0 und 3 bedeutet sowie Diaminen wie Ethylen-, Propylen- oder Tetramethylendiamin. Aber auch Ether (R¹)₂O wie Diethylether oder Tetrahydrofuran, Wasser, Alkohole (R¹)OH wie Methanol oder Ethanol, Pyridin, Pyridinderivate der Formel C₅H₅₋ₓ(R¹)ₓN wie beispielsweise 2-Picolin, 3-Picolin, 4-Picolin, 2,3-Lutidin, 2,4-Lutidin, 2,5-Lutidin, 2,6-Lutidin oder 3,5-Lutidin, Kohlenmonoxid, C₁-C₁₂-Alkylnitrile oder C₆-C₁₄-Arylnitrile sind geeignet, wie Acetonitril, Propionitril, Butyronitril oder Benzonitril. Weiterhin können einfach oder mehrfach ethylenisch ungesättigte Doppelbindungssysteme als Ligand dienen, wie Ethenyl, Propenyl, cis-2-Butenyl, trans-2-Butenyl, Cyclohexenyl oder Norbornenyl.
- R¹: wird ausgewählt aus Wasserstoff, C₁-C₂₀-Alkylgruppen, die ihrerseits mit O (C₁-C₆-Alkyl)- oder N (C₁-C₆-Alkyl)₂-Gruppen substituiert sein können, C₃-C₁₂-Cycloalkylgruppen, C₇-C₁₅-Aralkylgruppen und C₆-C₁₄-Arylgruppen.
- L²: wird ausgewählt aus
- Halogenidionen wie Fluorid, Chlorid, Bromid, oder Iodid, bevorzugt sind Chlorid und Bromid,
- Amine (R²)ₓNH₃₋ₓ, wobei x eine ganze Zahl zwischen 0 und 3 bedeutet und R² für C₁-C₁₂-Alkylgruppen steht,
- C₁-C₆-Alkylanionen wie Me⁻, (C₂H₅)⁻, (C₃H₇)⁻, (n-C₄H₉)⁻, (tert.-C₄H₉)⁻ oder (C₆H₁₄)⁻;
- Allylanionen oder Methallylanionen,
- Benzylanionen oder
- Arylanionen wie (C₆H₅)⁻;
- M: ein Übergangsmetall der Gruppen 7 bis 10 des Periodensystems der Elemente; bevorzugt sind Mangan, Eisen, Kobalt, Nickel oder Palladium und besonders bevorzugt ist Nickel.
- z: ist eine ganze Zahl von 0 bis 4.

Im Rahmen dieser Schrift versteht man unter Alkylgruppen lineare oder verzweigte Alkylreste mit 1 bis 20 Kohlenstoffatomen, beispielsweise Methyl, Ethyl, n-Propyl, isoPropyl, n-Butyl, 1-Methylpropyl, 2-Methylpropyl, n-Pentyl, 1-Methylbutyl, 2-Methylbutyl, 3-Methylbutyl, 1-Ethylpropyl, 2-Ethylpropyl, 1,1-Dimethylpropyl, 2,2-Dimethylpropyl, 1,2-Dimethylpropyl, n-Hexyl, 1-Methylpentyl, 2-Methylpentyl, 3-Methylpentyl, 4-Methylpentyl, 1-Ethylbutyl, 2-Ethylbutyl, 3-Ethylbutyl, 1,1-Dimethylbutyl, 2,2-Dimethylbutyl, 3,3-Dimethylbutyl, 1,2-Dimethylbutyl, 1,3-Dimethylbutyl, n-Heptyl, 1-Methylhexyl, 2-Methylhexyl, 3-Methylhexyl, 4-Methylhexyl, 5-Methylhexyl, 1-Ethylpentyl, 2-Ethylpentyl, 3-Ethylpentyl, 4-Ethylpentyl, 1,1-Dimethylpentyl, 2,2-Dimethylpentyl, 3,3-Dimethylpentyl, 4,4-Dimethylpentyl, 1,2-Dimethylpentyl, 1,3-Dimethylpentyl, 1,4-Dimethylpentyl, 2,3-Dimethylpentyl, 2,4-Dimethylpentyl, n-Octyl, 1-Methylheptyl, 2-Methylheptyl, 3-Methylheptyl, 4-Methylheptyl, 5-Methylheptyl, 6-Methylheptyl, 1-Ethylhexyl, 2-Ethylhexyl, 3-Ethylhexyl, 4-Ethylhexyl, 5-Ethylhexyl, 1,1-Dimethylhexyl, 2,2-Dimethylhexyl, 3,3-Dimethylhexyl, 4,4-Dimethylhexyl, 5,5-Dimethylhexyl, 1,2-Dimethylhexyl, 1,3-Dimethylhexyl, 1,4-Dimethylhexyl, 1,5-Dimethylhexyl, 2,3-Dimethylhexyl, 2,4-Dimethylhexyl, 2,5-Dimethylhexyl, 3,4-Dimethylhexyl, 3,5-Dimethylhexyl sowie die höheren Homologen und deren Isomeren.

Unter Cycloalkylgruppen werden in dieser Schrift monocyclische, gesättigte Kohlenwasserstoffgruppen mit 3 bis 12 Kohlenstoffringgliedern, beispielsweise Cyclopropyl-, Cyclobutyl-, Cyclopentyl-, Cyclohexyl-, Cycloheptyl-, Cyclooctyl-, Cyclononyl-, Cyclodecyl-, Cycloundecyl- oder Cyclododecylgruppen verstanden.

Bei den Aralkylgruppen handelt es sich um organische Reste, mit 6 bis 10 Kohlenstoffatomen im Arylteil und 1 bis 9 Kohlenstoffatomen im Alkylteil. Die bevorzugte Aralkylgruppe ist die Benzylgruppe.

Unter Arylgruppe wird ein ein- bis dreikerniges aromatisches Ringsystem, enthaltend 6 bis 14 Kohlenstoffringglieder, beispielsweise Phenyl, Naphthyl oder Anthracenyl, verstanden.

Bei den Alkylen-, Cycloalkylen-, Aralkylen- oder Arylengruppen handelt es sich um zweibindige funktionelle Gruppen, welche sich von den entsprechenden vorgenannten Alkyl-, Cycloalkyl-, Aralkyl- oder Arylgruppen ableiten.

In einer besonderen Ausführungsform sind L¹ und L² miteinander durch eine oder mehrere kovalente Bindungen verknüpft. Beispiele für solche Liganden sind 1,5-Cyclooctadienyl-Liganden ("COD"), 1,6-Cyclodecenyl-Liganden oder 1,5,9-all-trans-Cyclododecatrienyl-Liganden.

in einer weiteren besonderen Ausführung ist L¹ Tetramethylethylendiamin (TMEDA).

Ganz besonders bevorzugte Metallverbindungen sind Ni(COD)₂ und Ni(CH₃)₂(TMEDA).

Die Bedingungen zur Umsetzung des oder der Ligandenverbindungen Ia und/oder Ib mit der Metallverbindung und der Phosphinverbindung sind an sich unkritisch. Gewöhnlich werden sie bei einer Temperatur von 0 bis 100°C in einem Lösemittel umgesetzt, das aus aliphatischen oder aromatischen Kohlenwasserstoffen wie beispielsweise n-Heptan, Toluol, Ethylbenzol, ortho-Xylol, meta-Xylol oder para-Xylol ausgewählt werden kann. Auch Chlorbenzol ist als Lösemittel geeignet, weiterhin Ketone wie beispielsweise Aceton, nichtcyclische oder cyclische Ether wie beispielsweise Diethylether, Diisopropylether, 1,4-Dioxan oder Tetrahydrofuran, Wasser oder Alkohole wie beispielsweise Methanol oder Ethanol.

Als Molverhältnis von Metallverbindung zur Phosphinverbindung haben sich Verhältnisse von 1:1000 bis 1000:1 bewährt, bevorzugt sind 1:10 bis 10:1 und besonders bevorzugt 1:2 bis 2:1 und alle Werte dazwischen.

Dabei ist es möglich, die Metallverbindung mit dem gewählten organischen Liganden und der Phosphinverbindung außerhalb des Polymerisationsreaktors zur Reaktion zu bringen und die Reaktionslösung dann in den Polymerisationsreaktor zu geben.

Die Umsetzung von Metallverbindung, Phosphinverbindung und Ligandenverbindung erfolgt bevorzugt innerhalb des Polymerisationsreaktors, wobei es von Vorteil sein kann, auch bereits andere Stoffe wie beispielsweise weitere Lösungsmittel, zu polymerisierende Olefine und andere Hilfsstoffe wie beispielsweise Emulgatoren zuzusetzen oder vorzulegen.

Die Wahl der Reaktionsbedingungen hängt dabei jeweils von den eingesetzten Stoffen ab. Besonders bei wasserempfindlichen Vorstufen hat es sich als vorteilhaft erwiesen, die Vorstufen erst außerhalb des Polymerisationsreaktors in einem organischen Lösemittel zur Reaktion zu bringen und dann das Reaktionsprodukt in den Polymerisationsreaktor zu dosieren.

Dieses Vorgehen ist ebenfalls dann vorteilhaft, wenn sich die Vorstufen nicht vollständig im verwendeten Lösungsmittel lösen, wohl aber das Reaktionsprodukt.

Auf eine Isolierung und Reinigung der in situ-gebildeten Komplexe wird verzichtet.

Die in situ-erzeugten Komplexe eignen sich vorzüglich zum Einsatz bei der Polymerisation oder Copolymerisation von Olefinen in Wasser oder in einem Lösemittelgemisch, das mindestens 50 Vol.-% Wasser enthält.

Die Polymerisation wird in Gegenwart eines Emulgators durchgeführt, welcher sowohl die flüssigen Olefine als auch die gebildeten Polymerpartikel sowie ggf. mitverwendetes gering wasserlösliches Lösemittel in wässrig disperser Verteilung hält.

In einigen Fällen gelingt eine Aktivierung des in situ-gebildeten Polymerisationskatalysators durch Ethylen. Die Leichtigkeit der Aktivierungsreaktion hängt entscheidend von der Natur des Liganden L¹ ab. So konnte gezeigt werden, dass für den Fall, dass L¹ beispielsweise ein Tetramethylethylendiamin-Ligand ist, die Aktivierung besonders gut gelingt.

Die Polymerisation der Olefine nach dem erfindungsgemäßen Verfahren kann in an sich bekannter Weise durchgeführt werden.

Dabei ist die Reihenfolge der Zugabe der Reagenzien im erfindungsgemäßen Verfahren unkritisch. So kann zunächst gasförmiges Monomer auf das Lösemittel aufgepresst bzw. flüssiges Monomer zudosiert werden, und anschließend wird das Gemisch aus Ligand, Phosphinverbindung und Metallverbindung zugegeben. Man kann aber auch das Gemisch aus Ligand, Phosphinverbindung und Metallverbindung zunächst mit weiterem Lösemittel verdünnen und anschließend Monomer zugeben.

Die eigentliche Polymerisation läuft üblicherweise bei einem Mindestdruck von 1 bar, unterhalb dieses Druckes ist die Polymerisationsgeschwindigkeit zu gering. Bevorzugt sind 2 bar und besonders bevorzugt ist ein Mindestdruck von 10 bar.

Als maximaler Druck sind 4000 bar zu nennen; bei höheren Drücken sind die Anforderungen an das Material des Polymerisationsreaktors sehr hoch, und der Prozess wird unwirtschaftlich. Bevorzugt sind 100 bar und besonders bevorzugt sind 50 bar (angegeben sind jeweils die Überdruckwerte).

Die Polymerisationstemperatur lässt sich in einem weiten Bereich variieren. Als Mindesttemperatur sind 10°C zu nennen, da bei tieferen Temperaturen die Polymerisationsgeschwindigkeit zurückgeht. Bevorzugt ist eine Mindesttemperatur von 40 °C und besonders bevorzugt sind 65°C. Als maximale sinnvolle Temperatur sind 350°C zu nennen und bevorzugt 150°C, besonders bevorzugt sind 100°C.

Als organische Lösemittel eignen sich aromatische Lösemittel wie Benzol, Toluol, Ethylbenzol, ortho-Xylol, meta-Xylol und para-Xylol sowie Mischungen derselben.
Des weiteren eignen sich cyclische Ether wie Tetrahydrofuran und Dioxan oder acyclische Ether wie Diethylether, Di-n-butylether, Di-isopropylether oder 1,2-Dimethoxyethan. Auch Ketone wie Aceton, Methylethylketon oder Diisobutylketon sind geeignet, desgleichen Amide wie Dimethylformamid oder Dimethylacetamid. Weiterhin sind Gemische dieser Lösemittel untereinander geeignet sowie Gemische dieser Lösemittel mit Wasser oder Alkoholen wie Methanol oder Ethanol.

Häufig werden Mischungen aus Aceton und Wasser als Lösemittel verwendet.

Die Menge des Lösemittels ist ebenfalls unkritisch, es muss jedoch gewährleistet sein, dass sich der in situ-gebildete Komplex vollständig lösen kann, andernfalls ist mit Aktivitätseinbußen zu rechnen. Der Lösungsvorgang kann gegebenenfalls durch Ultraschallbehandlung beschleunigt werden.

Der ebenfalls zuzugebende Emulgator kann in einer weiteren Portion des Lösemittels oder auch zusammen mit der Liganden- oder der Metallverbindung gelöst werden.

Dabei wird die Menge des Emulgators so gewählt, dass das Massenverhältnis zwischen Monomer und Emulgator größer als 1 ist, bevorzugt größer als 10 und besonders bevorzugt größer als 20. Auch muss die Emulgatormenge so bemessen sein, dass sie ausreicht, die gebildeten Polymerpartikel im wässrigen Medium in disperser Verteilung zu halten. Häufig beträgt die Emulgatormenge 0,01 bis 5 Gew.-Teile, bezogen auf 100 Gew.-Teile Wasser.

Die Ligandenverbindungen Ia und/oder Ib können für sich als Emulgatoren wirken. Die Aktivität in der Polymerisation wird jedoch deutlich gesteigert, wenn ein zusätzlicher Emulgator zugegeben wird. Dieser Emulgator kann nichtionischer oder ionischer Natur sein.

Gebräuchliche nichtionische Emulgatoren sind z.B. ethoxylierte Mono-, Di- und Tri-Alkylphenole (EO-Grad: 3 bis 50, Alkylrest: C₄-C₁₂) sowie ethoxylierte Fettalkohole (EO-Grad: 3 bis 80;.Alkylrest: C₈-C₃₆). Beispiele hierfür sind die Lutensol^{®}-Marken der BASF AG oder die Triton^{®}-Marken der Union Carbide.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂-C₁₈) und ethoxylierter Alkylphenole (EO-Grad: 3 bis 50, Alkylrest: C₄-C₁₂), von Alkylsulfonsäuren (Alkylrest: C₁₂-C₁₈) und von Alkylarylsulfonsäuren (Alkylrest: C₉-C₁₈).

Geeignete kationische Emulgatoren sind in der Regel einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Bevorzugt werden nichtionische und/oder anionische Emulgatoren, insbesondere bevorzugt anionische Emulgatoren eingesetzt.

Als Polymerisationsreaktor haben sich gerührte Kessel und Autoklaven sowie Rohrreaktoren als brauchbar erwiesen, wobei die Rohrreaktoren als Schlaufenreaktor ausgeführt werden können.

Das oder die zu polymerisierenden Olefin(e) werden in dem Polymerisationsmedium gemischt. Dabei können als Polymerisationsmedium Wasser oder Gemische von Wasser mit den oben aufgeführten Lösemitteln verwendet werden. Es ist zu beachten, dass der Anteil an Wasser mindestens 50 Vol.-% beträgt, bezogen auf die Gesamtmischung, bevorzugt mindestens 90 Vol.-% und besonders bevorzugt mindestens 95 Vol.-%.

Die Lösungen des in situ-erzeugten Komplexes und gegebenenfalls des Emulgators werden mit dem Gemisch aus Olefin und wässrigem Polymerisationsmedium vereinigt. Die Reihenfolge der Zugabe der verschiedenen Komponenten ist an sich unkritisch. Es ist jedoch erforderlich, dass die Vereinigung der Komponenten so schnell erfolgt, dass keine Kristallisation von intermediär eventuell auftretenden schwer löslichen Komplexverbindungen erfolgt.

Als Polymerisationsverfahren sind grundsätzlich kontinuierliche und diskontinuierliche Verfahren geeignet. Bevorzugt sind halbkontinuierliche Verfahren (Semi-batch-Verfahren), in denen nach Vermischen aller Komponenten Olefin oder Olefingemische im Verlauf der Polymerisation nachdosiert werden.

Nach dem erfindungsgemäßen Verfahren werden wässrige Polymerdispersionen erhalten.

Die mittleren Teilchendurchmesser der Polymerpartikel in den erfindungsgemäß zugänglichen Dispersionen betragen zwischen 10 und 1000 nm, bevorzugt zwischen 50 und 500 nm und besonders bevorzugt zwischen 70 und 350 nm. Die Verteilung der Teilchendurchmesser kann, muss aber nicht sehr einheitlich sein. Für manche Anwendungen, insbesondere für solche mit hohen Feststoffanteilen (> 55%), sind breite oder bimodale Verteilungen sogar bevorzugt.

Von Bedeutung ist, dass das erfindungsgemäße Verfahren vorteilhaft nach der Methode der Miniemulsionspolymerisation durchgeführt werden kann. Erfindungsgemäß können optional dann auch gering in Wasser lösliche organische Lösemittel eingesetzt werden. Geeignete gering in Wasser lösliche Lösemittel sind flüssige aliphatische und aromatische Kohlenwasserstoffe mit 5 bis 30 C-Atomen, wie beispielsweise n-Pentan und Isomere, Cyclopentan, n-Hexan und Isomere, Cyclohexan, n-Heptan und Isomere, n-Octan und Isomere, n-Nonan und Isomere, n-Decan und Isomere, n-Dodecan und Isomere, n-Tetradecan und Isomere, n-Hexadecan und Isomere, n-Octadecan und Isomere, Eicosan, Benzol, Toluol, Ethylbenzol, Cumol, ortho-, meta- oder para-Xylol, Mesitylen, sowie allgemein Kohlenwasserstoffgemische im Siedebereich von 30 bis 250°C. Ebenfalls einsetzbar sind Hydroxyverbindungen, wie gesättigte und ungesättigte Fettalkohole mit 10 bis 28 C-Atomen, beispielsweise n-Dodecanol, n-Tetradecanol, n-Hexadecanol und deren Isomeren oder Cetylalkohol, Ester, wie beispielsweise Fettsäureester mit 10 bis 28 C-Atomen im Säureteil und 1 bis 10 C-Atomen im Alkoholteil oder Ester aus Carbonsäuren und Fettalkoholen mit 1 bis 10 C-Atomen im Carbonsäureteil und 10 bis 28 C-Atomen im Alkoholteil. Selbstverständlich ist es auch möglich, Gemische vorgenannter Lösemittel einzusetzen.

Die Gesamtmenge an gering in Wasser löslichem organischen Lösemittel beträgt bis zu 15 Gew.-Teilen, bevorzugt 0,001 bis 10 Gew.-Teilen und insbesondere bevorzugt 0,01 bis 5 Gew.-Teilen, jeweils bezogen auf 100 Gew.-Teile Wasser.

Vorteilhaft ist es, wenn die Löslichkeit des gering in Wasser löslichen Lösemittels oder des Lösemittelgemisches unter Reaktionsbedingungen im wässrigen Reaktionsmedium möglichst ≤ 50 Gew.-%, ≤ 40 Gew.-%, ≤ 30 Gew.%, ≤ 20 Gew.-% oder ≤ 10 Gew.-%, jeweils bezogen auf die Gesamtlösemittelmenge, ist.

Lösemittel werden insbesondere dann eingesetzt, wenn die zur Polymerisation eingesetzten Olefine unter Reaktionsbedingungen (Druck/Temperatur) gasförmig sind, wie dies beispielsweise bei Ethen, Propen, 1-Buten und/oder iso-Buten der Fall ist.

Vorteilhaft ist es, wenn beim Miniemulsionsverfahren die Gesamtmenge Ligandenverbindung Ia und/oder Ib, der Phosphinverbindung und des Metallsalzes in einer Teil- oder der Gesamtmenge des flüssigen, wenig in Wasser löslichen Olefins und/oder des gering in Wasser löslichen organischen Lösemittels gelöst bzw. umgesetzt wird. Anschließend wird die Teil- oder die Gesamtmenge des wenig in Wasser löslichen Olefins und/oder des gering in Wasser löslichen organischen Lösemittels, welche den in situ-gebildeten Polymerisationskatalysator gelöst oder wenigstens dispergiert enthält, in Anwesenheit von Emulgator im wässrigen Medium als disperse Phase mit einem mittleren Tröpfchendurchmesser ≤ 1000 nm dispergiert und bei Reaktionstemperatur die gegebenenfalls verbliebene Restmenge an Olefin kontinuierlich oder diskontinuierlich zugegeben.

Das erfindungsgemäße Verfahren wird häufig so durchgeführt, dass man in einem ersten Schritt die Gesamtmenge der Metallverbindung, der Ligandenverbindung Ia und/oder Ib sowie der Phosphinverbindung in einer Teil- oder der Gesamtmenge des gering in Wasser löslichen Olefins und/oder des gering in Wasser löslichen organischen Lösemittels löst und dabei zum Polymerisationskatalysator umsetzt. Anschlie-ßend wird diese Lösung gemeinsam mit einem Emulgator in wässrigem Medium unter Ausbildung von Öl-in-Wasser-Dispersionen mit einem mittleren Tröpfchendurchmesser > 1000 nm, den sogenannten Makroemulsionen, dispergiert. Danach überführt man diese Makroemulsionen mit bekannten Maßnahmen in ÖI-in-Wasser-Emulsionen mit einem mittleren Tröpfchendurchmesser ≤ 1000 nm, den sogenannten Miniemulsionen und versetzt diese bei Reaktionstemperatur mit der gegebenenfalls verbliebenen Rest- oder Gesamtmenge des zu polymerisierenden Olefins.

Die mittlere Größe der Tröpfchen der dispersen Phase der erfindungsgemäß zu verwendenden Öl-in-Wasser-Emulsionen lässt sich nach dem Prinzip der quasielastischen dynamischen Lichtstreuung bestimmen (der sogenannte z-mittlere Tröpfchendurchmesser d_{z} der unimodalen Analyse der Autokorrelationsfunktion), beispielsweise mit einem Coulter N4 Plus Particle Analyser der Fa. Coulter Scientific Instruments, bestimmen.

Erfindungsgemäß sind die solchermaßen für die sogenannten Miniemulsionen ermittelten Werte für d_{z} normalerweise ≤ 700 nm, häufig ≤ 500 nm. Günstig ist erfindungsgemäß der d_{z}-Bereich von 100 nm bis 400 nm bzw. von 100 nm bis 300 nm. Im Nörmalfall beträgt d_{z} der erfindungsgemäß einzusetzenden wässrigen Miniemulsion ≥ 40 nm.

Die allgemeine Herstellung von wässrigen Miniemulsionen aus wässrigen Makroemulsionen ist dem Fachmann bekannt (vgl. P.L. Tang, E.D. Sudol, C.A. Silebi und M.S. EI-Aasser in Journal of Applied Polymer Science, Vol. 43, Seiten 1059 bis 1066 [1991]). Üblicherweise werden dabei die Makroemulsionen zur Herstellung von Miniemulsionen einer starken Scherung ausgesetzt. Eine solche starke Scherung kann beispielsweise durch Hochdruckhomogenisierung, durch Ultraschall oder aber durch Strahldispergatoren erreicht werden. Bevorzugt erfolgt die Bildung einer Miniemulsion durch Ultraschallbehandlung.

Die nach dem erfindungsgemäßen Verfahren erhaltenen Polymere weisen technisch interessante Eigenschaften auf. Im Falle von Polyethylen können sie einen hohen Grad der Kristallinität aufweisen, was beispielsweise durch die Anzahl der Verzweigungen nachgewiesen werden kann. Man findet häufig weniger als 40 Verzweigungen, bevorzugt weniger als 20 Verzweigungen pro 1000 C-Atomen des Polymers und besonders bevorzugt weniger als 10 Verzweigungen, bestimmt durch ¹H-NMR und ¹³C-NMR-Spektroskopie.

Die Molekulargewichtsverteilungen der nach dem erfindungsgemäßen Verfahren erhältlichen Polyolefine, d.h. die Q-Werte liegen zwischen 1,0 und 50 und bevorzugt zwischen 1,5 und 10. Die Molmassen der erhaltenen Polyolefine liegen im Bereich von 1000 bis 1000000 insbesondere im Bereich von 3000 bis 150000 (Zahlensmittel).

Vorteilhaft an den nach dem erfindungsgemäßen Verfahren zugänglichen Dispersionen ist neben dem günstigen Preis aufgrund der billigen Olefine und Verfahren, dass sie witterungsstabiler als Dispersionen von Polybutadien oder Butadiencopolymeren sind. Gegenüber Dispersionen von Polymeren mit Acrylaten oder Methacrylaten als Hauptmonomer ist die geringere Neigung zum Verseifen als vorteilhaft zu nennen. Weiterhin ist von Vorteil, dass die meisten Olefine leichtflüchtig sind und sich nicht polymerisierte Restmonomere leicht entfernen lassen. Schließlich ist von Vorteil, dass während der Polymerisation keine Molmassenregler wie beispielsweise tert.-Dodecylmercaptan zugegeben werden müssen, die einerseits schlecht abgetrennt werden können, andererseits aber unangenehm riechen. Weiterhin ist es günstig, dass die aus dem erfindungsgemäßen Verfahren erhaltenen wässrigen Dispersionen relativ hohe Feststoffgehalte von bis zu über 30 Gew.-% aufweisen.

Aus den zunächst erhaltenen wässrigen Dispersionen lassen sich durch Entfernen des Wassers und gegebenenfalls des oder der organischen Lösemittel die Polymerpartikel als solche erhalten. Zur Entfernung des Wassers und gegebenenfalls des oder der organischen Lösemittel sind zahlreiche gängigen Verfahren geeignet, beispielsweise Filtrieren, Sprühtrocknen oder Verdampfen. Die so erhaltenen Polymere haben eine gute Morphologie und eine hohe Schüttdichte.

Die Teilchengröße lässt sich mit Lichtstreumethoden bestimmen. Einen Überblick findet man in D. Distler (Herausgeber) "Wässrige Polymerdispersionen", Wiley-VCH Verlag, 1. Auflage, 1999, Kapitel 4.

Die nach dem erfindungsgemäßen Verfahren hergestellten Dispersionen lassen sich in zahlreichen Anwendungen vorteilhaft verwenden, wie beispielsweise Papieranwendungen wie Papierstreicherei oder Oberflächenleimung, weiterhin Anstrichen und Lacken, Bauchemikalien, Klebrohstoffe, Formschäume, Textil- und Lederapplikationen, Teppichrückenbeschichtungen, Matratzen oder pharmazeutischen Anwendungen.

### Arbeitsbeispiele

Allgemeines: Die Synthesen wurden, wenn nicht anders beschrieben, nach der Schlenk-Technik unter Luft- und Feuchtigkeitsausschluss durchgeführt.

Die Bestimmung der Molmassen der erhaltenen Polymeren wurde mittels GPC durchgeführt.

In Anlehnung an DIN 55672 wurden die folgenden Bedingungen gewählt: Lösemittel 1,2,4-Trichlorbenzol, Fluss: 1 ml/min; Temperatur 140 °C. Es wurde an einem Waters 150C-Gerät gemessen, das mit Polyethylen-Standards kalibriert worden war.

Die Ermittlung des Feststoffgehaltes erfolgte durch Ausfällen des Polyolefins mit Methanol.

### Beispiel 1

55 mg (258 µmol) 2,3,6-Trichloro-para-benzochinon (Ib) und 68 mg (258 µmol) Triphenylphosphin wurden bei 20 bis 25°C (Raumtemperatur) in 1 ml wasserfreiem und entgastem Methanol, 4 ml wasserfreiem und entgastem Toluol und 0,3 ml entgastem Hexadekan gelöst. Die so erhaltene Lösung wurde 20 Minuten gerührt, wobei sie sich orange färbte. Die Lösung wurde dann in einem anderen Schlenk-Kolben gegeben, welcher 79 mg (287 µmol; 1,11 eq) Nickel(cyclooctadienyl)₂ [Ni(COD)₂] enthielt.

In der Zwischenzeit wurde eine Lösung aus 1 g Natriumdodecylsulfat [SDS] und 95 ml entgastem und entionisiertem Wasser hergestellt. 75 ml dieser wässrigen Lösung wurden direkt unter Sauerstoffausschluss in den Reaktor gegeben. Die verbleibende wässrige SDS-Lösung wurde zur vorgenannten organischen Katalysatormischung hinzugefügt und die erhaltene wässrige Mischung einer Ultraschallbehandlung (Bandelin HD2200, mit einer KE76-Sonde, 120 W, 2 Minuten) unterzogen. Die so erhaltene wässrige Miniemulsion wurde dann mit Hilfe einer Teflonkanüle in den Reaktor gegeben.

Der Reaktor wurde danach mit Ethylen gefüllt, wobei ein konstanter Ethylendruck von 40 bar eingestellt wurde. Gleichzeitig wurde der Reaktorinhalt unter Rühren (1000 Umdrehungen pro Minute) auf 70°C erhitzt. Nach 2 Stunden Reaktionszeit bei 70 °C wurde die Polymerisation durch Abkühlen des Reaktorinhalts auf Raumtemperatur und Entspannen auf Atmosphärendruck abgebrochen.

Der erhaltene wässrige Latex wurde unter Rühren mit 40 ml Methanol versetzt, wobei 8,7 g Polyethylen ausfielen (entsprechend einem Feststoffgehalt der wässrigen Polymerdispersion von 22 Gew.-%). Das erhaltene Polyethylen wies ein zahlenmittleres Molekulargewicht von ca. 5200 g/mol und gewichtsmittleres Molekulargewicht von ca. 13000 g/mol auf.

### Beispiel 2

Beispiel 2 erfolgte analog Beispiel 1 mit der Ausnahme, dass 45 mg (258 µmol) 2,6-Dichloro-para-benzochinon (Ia) anstelle von 55 mg (258 µmol) 2,3,6-Trichloro-para-benzochinon (Ib) eingesetzt wurden.

Durch die Methanolfällung wurden 12,6 g Polyethylen erhalten, entsprechend einem Feststoffgehalt der wässrigen Polymerdispersion von 32 Gew.-%. Das erhaltene Polyethylen wies ein zahlenmittleres Molekulargewicht von ca. 2500 g/mol und gewichtsmittleres Molekulargewicht von ca. 148000 g/mol auf.

### Vergleichsbeispiel 1

Bei der in der deutschen Patentanmeldung mit der Anmeldenummer 10234005.6 mit 64 mg (258 µmol) 2,3,5,6-Tetrachloro-para-benzochinon in analoger Weise durchgeführten Umsetzung wurden 7,1 g Polyethylen, entsprechend einem Feststoffgehalt der wässrigen Polymerdispersion von 18 Gew.-% erhalten. Das erhaltene Polyethylen wies ein zahlenmittleres Molekulargewicht von ca. 6200 g/mol und gewichtsmittleres Molekulargewicht von ca. 18000 g/mol auf.

### Beispiel 3

55 mg (258 µmol) 2,3,6-Trichloro-para-benzochinon (Ib) und 68 mg (258 µmol) Triphenylphosphin wurden bei Raumtemperatur in 1 ml wasserfreiem und entgastem Methanol, 4 ml wasserfreiem und entgastem Toluol und 0,3 ml entgastem Hexadekan gelöst. Die so erhaltene Lösung wurde 20 Minuten gerührt, wobei sie sich orange färbte. Die Lösung wurde dann in einem anderen Schlenk-Kolben gegeben, welcher 79 mg (287 µmol; 1,11 eq) Ni(COD)₂ enthielt.

In der Zwischenzeit wurde eine Lösung aus 1 g SDS und 95 ml entgastem und entionisiertem Wasser hergestellt. 75 ml dieser wässrigen Lösung wurden direkt unter Sauerstoffausschluss in den Reaktor gegeben. Die verbleibende wässrige SDS-Lösung wurde zur vorgenannten organischen Katalysatormischung hinzugefügt und die erhaltene wässrige Mischung einer Ultraschallbehandlung (120 W, 2 Minuten) unterzogen. Die so erhaltene wässrige Miniemulsion wurde dann mit Hilfe einer Teflonkanüle in den Reaktor gegeben.

Der Reaktor wurde danach mit 1-Buten gefüllt, wobei ein konstanter 1-Butendruck von 10 bar eingestellt wurde. Gleichzeitig wurde der Reaktorinhalt unter Rühren (1000 Umdrehungen pro Minute) auf 70°C erhitzt. Nach 30 Minuten wurde die Zufuhr des 1-Butens unterbrochen und durch Ethylen ersetzt, welches unter einem konstanten Druck von 40 bar stand.

Nach 1,5 Stunden weiterer Reaktionszeit bei 70°C wurde die Polymerisation durch Abkühlen auf Raumtemperatur und Entspannen des Reaktorinhalts auf Atmosphärendruck abgebrochen.

Durch die Methanolfällung wurden 24 g Ethylen/1-Buten-Copolymerisat erhalten, entsprechend einem Feststoffgehalt der wässrigen Polymerdispersion von 15 Gew.-%.

### Vergleichsbeispiel 2

Bei der in der deutschen Patentanmeldung mit der Anmeldenummer 10234005.6 mit 64 mg (258 µmol) 2,3,5,6-Tetrachloro-para-benzochinon in analoger Weise durchgeführten Umsetzung wurden 13 g Copolymer, entsprechend einem Feststoffgehalt der wässrigen Polymerdispersion von 8 Gew.-% erhalten.

### Beispiel 4

Beispiel 1 wurde wiederholt mit der Ausnahme, dass 1 ml wasserfreies und entgastes Toluol und 3 ml 1-Octen anstelle von 4 ml wasserfreiem und entgastem Toluol eingesetzt wurden.

Die erhaltene wässrige Latex hatte einen Feststoffgehalt von 16 Gew.-%. NMRspektroskopisch ließen sich im Polymer 3 mol-% 1-Octeneinheiten nachweisen.

### Beispiel 5

Beispiel 4 wurde wiederholt mit der Ausnahme, dass 3 ml 1-Hexen anstelle von 3 ml 1-Octen eingesetzt wurden.

Die erhaltene wässrige Latex hatte einen Feststoffgehalt von 18 Gew.-%. NMRspektroskopisch wurden im Polymer 5 mol-% 1-Hexeneinheiten nachgewiesen.

### Beispiel 6

Beispiel 4 wurde wiederholt mit der Ausnahme, dass 3 ml Norbornen anstelle von 3 ml 1-Octen eingesetzt wurden.

Die erhaltene wässrige Latex hatte einen Feststoffgehalt von 19 Gew.-%. NMRspektroskopisch konnten im erhaltenen Polymer 5 mol-% Norborneneinheiten nachgewiesen werden.

## Patentansprüche

1. Verfahren zur Herstellung einer wässrigen Polymerdispersion durch Umsetzung wenigstens eines Olefins in Anwesenheit wenigstens eines Polymerisationskatalysators und eines Emulgators in wässrigem Medium, **dadurch gekennzeichnet, dass** der Polymerisationskatalysator in einer in situ-Reaktion durch Umsetzung der Ligandenverbindung 2,6-Dichloro-para-benzochinon (Ia) und/oder 2,3,6-Trichloro-para-benzochinon (Ib)
mit einer Phosphinverbindung PR₃', wobei R' Wasserstoff, C₁-C₁₂-Alkylgruppen, C₃-C₁₂-Cycloalkylgruppen, C₇-C₁₅-Aralkylgruppen oder C₆-C₁₄-Arylgruppen bedeutet,
oder mit einer Diphosphinverbindung R₂'P-G-PR₂', wobei R'die gleiche Bedeutung hat wie bei den Phosphinverbindungen PR₃' und G für einen zweibindigen Rest wie C₁-C₁₂-Alkylengruppen, C₃-C₁₂-Cycloalkylengruppen, C₇-C₁₅-Aralkylengruppen oder C₆-C₁₄-Arylengruppen steht,
sowie mit einer Metallverbindung der allgemeinen Formel M(L²)₂ oder M(L²)₂(L¹)_{z},
wobei die Variablen wie folgt definiert sind:
M ein Übergangsmetall der Gruppen 7 bis 10 des Periodensystems der Elemente;
L¹ Phosphane (R¹)ₓPH₃₋ₓ oder Amine (R¹)ₓNH₃₋ₓ mit gleichen oder verschiedenen Resten R¹, Diamine, Ether (R¹)₂O, Wasser, Alkohole (R¹)OH, Pyridin, Pyridinderivate der Formel C₅H₅₋ₓ(R¹)ₓN, Kohlenmonoxid, C₁-C₁₂-Alkylnitrile, C₆-C₁₄-Arylnitrile oder ethylenisch ungesättigten Doppelbindungssystemen, wobei x eine ganze Zahl von 0 bis 3 bedeutet,
R¹ Wasserstoff, C₁-C₂₀-Alkylgruppen, die ihrerseits mit O(C₁-C₆-Alkyl)- oder N(C₁-C₆-Alkyl)₂-Gruppen substituiert sein können,
C₃-C₁₂-Cycloalkylgruppen, C₇-C₁₅-Aralkylgruppen und
C₆-C₁₄-Arylgruppen,
L² Halogenidionen, R²ₓNH₃₋ₓ, wobei x eine ganze Zahl von 0 bis 3 und R² C₁-C₁₂-Alkylgruppen bedeutet, und weiterhin C₁-C₆-Alkylanionen, Allylanionen, Benzylanionen oder Arylanionen, wobei L¹ und L² miteinander durch eine oder mehrere kovalente Bindungen verknüpft sein können,
z eine Zahl von 0 bis 4,
erzeugt wird und die Polymerisation des wenigstens einen Olefins in wässrigem Medium erfolgt, welches mindestens 50 Vol.-% Wasser enthält.

2. Verfahren nach Anspruch 1, **dadurch gekennzeichnet, dass** die Polymerisation unter den Bedingungen einer wässrigen Miniemulsionspolymerisation erfolgt.

3. Verfahren nach Anspruch 1 oder 2, **dadurch gekennzeichnet, dass** die Polymerisation in Anwesenheit eines anionischen Emulgators erfolgt.

4. Verfahren nach einem der Ansprüche 1 bis 3, **dadurch gekennzeichnet, dass** die Polymerisation in Anwesenheit von Ethylen erfolgt.

5. Verfahren nach Anspruch 4, **dadurch gekennzeichnet, dass** neben Ethylen wenigstens ein weiteres Olefin zur Polymerisation eingesetzt wird, welches ausgewählt ist aus der Gruppe umfassend Propylen, 1-Buten, 1-Hexen, 1-Octen, Norbornen und Styrol.

6. Verfahren nach Anspruch 4, **dadurch gekennzeichnet, dass** zur Polymerisation ausschließlich Ethylen eingesetzt wird.

## Claims

1. A process for the preparation of an aqueous polymer dispersion by reacting at least one olefin in the presence of at least one polymerization catalyst and one emulsifier in an aqueous medium, wherein the polymerization catalyst is produced in an in situ reaction by reacting the ligand compound 2,6-dichloro-para-benzoquinone (Ia) and/or 2,3,6-trichloro-para-benzoquinone (Ib)
with a phosphine compound PR₃', where R' is hydrogen, C₁-C₁₂-alkyl, C₃-C₁₂-cycloalkyl, C₇-C₁₅-aralkyl or C₆-C₁₄-aryl,
or with a diphosphine compound R₂'P-G-PR₂', where R' has the same meanings as in the phosphine compounds PR₃' and G is a divalent radical, such as C₁-C₁₂-alkylene, C₃-C₁₂-cycloalkylene, C₇-C₁₅-aralkylene or C₆-C₁₄-arylene,
and with a metal compound of the formula M(L²)₂ or M(L²)₂(L¹)_{z},
where:
M is a transition metal of groups 7 to 10 of the Periodic Table of the Elements,
L¹ are phosphanes (R¹)ₓPH₃₋ₓ or amines (R¹)ₓNH₃₋ₓ having identical or different radicals R¹, diamines, ethers (R¹)₂O, water, alcohols (R¹)OH, pyridine, pyridine derivatives of the formula C₅H₅₋ₓ(R¹)ₓN, carbon monoxide, C₁-C₁₂-alkylnitriles, C₆-C₁₄-arylnitriles or ethylenically unsaturated double bond systems, where x is an integer from 0 to 3,
R¹ is hydrogen or C₁-C₂₀-alkyl, which in turn may be substituted by O(C₁-C₆-alkyl) or N(C₁-C₆-alkyl)₂, or is C₃-C₁₂-cycloalkyl, C₇-C₁₅-aralkyl or C₆-C₁₄-aryl,
L² are halide ions, R²ₓNH_{3-x'} where x is an integer from 0 to 3 and R² is C₁-C₁₂-alkyl, and furthermore C₁-C₆-alkyl anions, allyl anions, benzyl anions or aryl anions, where L¹ and L² may be linked to one another by one or more covalent bonds,
z is from 0 to 4,
and the polymerization of the at least one olefin is effected in an aqueous medium which comprises at least 50% by volume of water.

2. The process according to claim 1, wherein the polymerization is effected under the conditions of an aqueous miniemulsion polymerization.

3. The process according to claim 1 or 2, wherein the polymerization is effected in the presence of an anionic emulsifier.

4. The process according to any of claims 1 to 3, wherein the polymerization is effected in the presence of ethylene.

5. The process according to claim 4, wherein, in addition to ethylene, at least one further olefin which is selected from the group consisting of propylene, 1-butene, 1-hexene, 1-octene, norbornene and styrene is used for the polymerization.

6. The process according to claim 4, wherein exclusively ethylene is used for the polymerization.

## Revendications

1. Procédé de préparation d'une dispersion polymère aqueuse par réaction d'au moins une oléfine en présence d'au moins un catalyseur de polymérisation et d'un émulsionnant en milieu aqueux, **caractérisé en ce que** le catalyseur de polymérisation est produit dans une réaction in situ par réaction du composé ligand 2,6-dichloro-para-benzoquinone (Ia) et/ou 2,3,6-trichloro-para-benzoquinone (Ib),
avec un composé phosphine PR₃', R' signifiant hydrogène, des groupes alkyle en C₁-C₁₂, des groupes cycloalkyle en C₃-C₁₂, des groupes aralkyle en C₇-C₁₅ ou des groupes aryle en C₆-C₁₄,
ou avec un composé diphosphine R₂'P-G-PR₂', R' ayant la même signification que dans les composés phosphine PR₃' et G représentant un radical à deux liaisons comme des groupes alkylène en C₁-C₁₂, des groupes cycloalkylène en C₃-C₁₂, des groupes aralkylène en C₇-C₁₅ ou des groupes arylène en C₆-C₁₄,
ainsi qu'avec un composé métallique de formule générale M(L²)₂ ou M(L²)₂(L¹)_{z},
les variables étant définies de la manière suivante:
M un métal de transition des groupes 7 à 10 du système périodique des éléments;
L¹ des phosphanes (R¹)ₓPH₃₋ₓ ou des amines (R¹)ₓNH₃₋ₓ avec des radicaux R¹ identiques ou différents, des diamines, des éthers (R¹)₂O, de l'eau, des alcools (R¹)OH, de la pyridine, des dérivés de pyridine de formule C₅H₅₋ₓ(R¹)ₓN, du monoxyde de carbone, des alkylnitriles en C₁-C₁₂, des arylnitriles en C₆-C₁₄ ou des systèmes de liaisons doubles éthyléniquement insaturés, x signifiant un nombre entier de 0 à 3,
R¹ hydrogène, des groupes alkyle en C₁-C₂₀ qui, de leur côté, peuvent être substitués avec des groupes O (alkyle en C₁-C₆)- ou N (alkyle en C₁-C₆)₂, des groupes cycloalkyle en C₃-C₁₂, des groupes aralkyle en C₇-C₁₅ et des groupes aryle en C₆-C₁₄,
L² des ions d'halogénure, R²ₓNH₃₋ₓ, x signifiant un nombre entier de 0 à 3 et des groupes R² alkyle en C₁-C₁₂, et en outre des anions alkyle en C₁-C₆, des anions allyle, des anions benzyle ou des anions aryle, L¹ et L² pouvant être reliés l'un à l'autre par une ou plusieurs liaisons covalentes,
z un nombre de 0 à 4,
et la polymérisation de la au moins une oléfine s'effectuant en milieu aqueux, lequel contient au moins 50% en volume d'eau.

2. Procédé selon la revendication 1, **caractérisé en ce que** la polymérisation se fait dans les conditions d'une polymérisation en mimiémulsion aqueuse.

3. Procédé selon la revendication 1 ou 2, **caractérisé en ce que** la polymérisation se fait en présence d'un émulsionnant anionique.

4. Procédé selon l'une des revendications 1 à 3, **caractérisé en ce que** 1a polymérisation s'effectue en présence d'éthylène.

5. Procédé selon la revendication 4, **caractérisé en ce qu'**on utilise pour la polymérisation, à côté de l'éthylène, au moins une autre oléfine, laquelle est sélectionnée parmi le groupe comprenant le propylène, le 1-butène, le 1-hexène, le 1-octène, le norbornène et le styrène.

6. Procédé selon la revendication 4, **caractérisé en ce qu'**on utilise pour la polymérisation exclusivement de l'éthylène.
